# EUROPÄISCHE PATENTANMELDUNG

(11) **EP 1 755 013 A2**
(43) Veröffentlichungstag der Anmeldung: **21.02.2007**
(21) Anmeldenummer: 06117415.7
(22) Anmeldetag: 18.07.2006
(51) Int. Cl.: G05B 19/418

(54) **Verfahren zur Prüfung eines Fertigungsgutes**

(30) Priorität: 17.08.2005 DE 102005038889
(71) Anmelder: SIEMENS AKTIENGESELLSCHAFT, 80333 München (DE)
(72) Erfinder: Deventer, Rainer, 91056, Erlangen (DE); Kröll, Johannes, 90587, Obermichelbach (DE); Lanosa, Jose Ignacio, 91058 Erlangen (DE)

(57) **Zusammenfassung**

Die Erfindung betrifft ein Verfahren zur Prüfung eines Fertigungsgutes (11), wobei mindestens ein ein Prüfkriterium repräsentierender Messwert (1 bis 5) des Fertigungsgutes (11) erfasst wird, wobei entschieden wird, ob der erfasste Messwert (1 bis 5) innerhalb eines vorgegebenen Sollwertbereiches liegt. Dieses Verfahren findet Anwendung in der Qualitätsprüfung bei einer Serienfertigung (12) von Fertigungsgütern (11). Liegt ein Messwert (1 bis 5) außerhalb des geforderten Sollwertbereiches, so erfüllt er zunächst nicht die geforderten Qualitätsmerkmale. Um eine erneute Überprüfung mit einer aufwendigen Messdatenerfassung zu vermeiden, wird der Messwert (1 bis 5) mittels Referenzdaten analysiert. Ein Analyseergebnis wird dafür ermittelt, ob das Fertigungsgut (11) bei einer erneuten Entscheidung das Prüfkriterium erfüllen wird.

## Beschreibung

Die Erfindung liegt auf dem Gebiet der Serienproduktion für Werkstücke und/oder Fertigungsgüter.

Die Erfindung betrifft ein Verfahren zur Prüfung eines Fertigungsgutes, wobei mindestens ein ein Prüfkriterium repräsentierender Messwert des Fertigungsgutes erfasst wird, und wobei entschieden wird, ob der erfasste Messwert innerhalb eines vorgegebenen Sollwertbereiches liegt.

Die Produktion von Werkstücken, Fertigungsgütern und/oder vollständigen Aggregaten, alle im Folgenden allgemein als "Fertigungsgut" bezeichnet, beispielsweise in der Automobilindustrie, unterliegt, insbesondere bei sicherheitsrelevanten Teilen, einer sehr strengen Qualitätsüberwachung. Dies bedeutet, dass jedes Fertigungsgut einer intensiven Prüfung unterzogen wird, bevor es endgültig verbaut und ausgeliefert wird.

Bei einer Überprüfung eines Fertigungsgutes kann es vorkommen, dass das Fertigungsgut bei einer ersten Qualitätskontrolle als nicht in Ordnung geprüft wird, eine zweite Überprüfung jedoch ohne Beanstandung passiert. Dies kann beispielsweise auf Temperaturschwankungen oder Einlaufeffekte von gewissen Fertigungsgütern zurückgeführt werden. Wird ein Fertigungsgut als fehlerhaft erkannt oder seine Qualitätsmerkmale sind nicht ausreichend, muss es überarbeitet werden.

Um ein unnötiges Überarbeiten der Fertigungsgüter zu vermeiden, wird - wie bereits gesagt - jedes Fertigungsgut, welches bei einer ersten Prüfung als nicht in Ordnung erkannt wird, ein zweites Mal überprüft.

Die Aufgabe der vorliegenden Erfindung besteht darin, ein Verfahren anzugeben, mit welchem ein zweites Überprüfen eines Fertigungsgutes, welches eine erste Überprüfung nicht bestanden hat, vermeidbar ist.

Die Aufgabe wird bezogen auf das eingangs genannte Verfahren erfindungsgemäß dadurch gelöst, dass ein außerhalb des Sollwertbereiches liegender Messwert mittels Referenzdaten analysiert wird, wobei als Analyseergebnis eine Prognose dafür ermittelt wird, dass das Fertigungsgut bei erneuter Entscheidung das Prüfkriterium erfüllen wird. Mit dieser Vorgehensweise können kostenintensive Mehrfachüberprüfungen zumindest teilweise vermieden werden. Eine Datenanalyse, also die Analyse der Messwerte bezüglich der zu den Messwerten korrelierenden Referenzdaten lässt eine statistisch signifikante Aussage über die Messwerte zu. Auch im Bereich der Prozessautomatisierung, beispielsweise bei der Serienproduktion von Fertigungsgütern, fallen große Datenmengen an. Diese Datenmengen lassen sich in vielfältiger Hinsicht nutzen, z.B. für die Analyse von Ursachen, die zu Qualitätsproblemen führen, oder für eine vorbeugende Wartung, beispielsweise um eine typische Reparaturreihenfolge zu analysieren. Dabei wird mittels der Datenanalyse nach Korrelationen zwischen einem Ereignis, insbesondere einem ermittelten Messwert, und bestimmtem Messwertmustern gesucht.

In einer bevorzugten Ausgestaltung der Erfindung werden erfasste Messwerte zu mehreren Fertigungsgütern zu den Referenzdaten zusammengefasst und archiviert. Archiviert bedeutet hierbei, dass die Messwerte, vorzugsweise durch Speicherung in beispielsweise einem Automatisierungssystem und/oder einen Leitrechner für die Zukunft bewahrt werden. Unter den erfassten Messwerten sind auch solche Messwerte zu verstehen, die bereits bei einer Serienproduktion von Fertigungsgütern, vorzugsweise einer bestimmten Losgröße, erfasst wurden. So können große Datenmengen, welche wertvolle Informationen enthalten, verwendet werden um "lernfähige Systeme" an ihre zukünftigen Aufgaben zu adaptieren.

Weiterhin ist es vorteilhaft, dass erfasste Messwerte desselben Fertigungsgutes zu einem Prüfdatensatz zusammengefasst werden. Für eine spätere Auswertung ist es besonders vorteilhaft, dass die Messwerte, welche in einer geeigneten Auswahl den Gesamtcharakter eines Fertigungsgutes beschreiben, zu einem Datensatz zusammengefasst werden.

Zweckmäßig ist es, dass dem Prüfdatensatz eine Fertigungsgut-Kennung zugewiesen wird. Durch die Fertigungsgut-Kennung können beispielsweise Mehrfachüberprüfungen erkannt und zusammengeführt werden.

In einer weiteren bevorzugten Ausgestaltung wird dem Prüfdatensatz das Analyseergebnis zugewiesen. Nachdem ein Prüfdatensatz durch die Fertigungsgut-Kennung eindeutig identifizierbar ist, wird dem Prüfdatensatz ein endgültiger Status der Überprüfung oder Analyse zugewiesen.

Vorzugsweise werden mittels der Fertigungsgut-Kennung unterschiedliche Messergebnisse desgleichen Fertigungsgutes zusammengeführt. Eine solche Zusammenführung ist besonders vorteilhaft für eine sehr einfache Art der Analyse. Liegt beispielsweise ein Messergebnis von mehreren Überprüfungen in dem geforderten Sollwertbereich so kann dem Fertigungsgut der Status in Ordnung zugewiesen werden.

Eine weitere Steigerung der Vorhersagekraft und/oder der Aussagekraft der Qualitätsüberprüfung wird dadurch erreicht, dass die Analyse mittels intelligenter Algorithmen, insbesondere mittels "Data-Mining"-Algorithmen, durchgeführt wird. "Data-Mining" wird vorzugsweise als eine Art Wahrscheinlichkeitsrechnung angewendet. Mit dem großen Vorteil, dass auch verborgene Korrelationen aufgedeckt und damit nutzbar gemacht werden können. Auf diese Art lassen sich beispielsweise auch Schwankungen von Produktqualitätsgrößen verringern.

Vorzugsweise wird mindestens eine der folgenden Methoden:
a) Analyse mittels eines Entscheidungsbaumes,
b) Analyse mittels eines neuronalen Netzes,
c) Analyse mittels eines Meta-Lern-Algorithmuses, insbesondere einem "Bagging-Algorithmus",
d) Analyse mittels Verfahren zur Regelinduktion,
e) Analyse mittels eines adaptierten Modells,
f) Analyse mittels Fuzzy-Algorithmen und/oder Fuzzy-Reglern, angewendet.

Mit Vorteil lassen sich in einem Großteil der Fälle die vorgenannten Methoden anwenden, aber auch Bayesnetze und/oder Support-Vektor-Maschinen können genutzt werden.

Durch die Verwendung einer Analysemethode oder einer Kombination von Analysemethoden, beispielsweise neuronale Netzwerke und Entscheidungsbäume, können Fertigungsgüter erkannt werden, welche bei einer zweiten Prüfung mit einer sehr hohen Wahrscheinlichkeit als in Ordnung bzw. nicht in Ordnung erkannt werden.

Zusammengefasst kann gesagt werden, dass "Data-Mining", also die Methoden zur Analyse, ein automatisches Auswerten von Datenbeständen mit Hilfe von beispielsweise statistischen Verfahren, künstlichen neuronalen Netzwerken, Fuzzy-Logic, Clustering-Verfahren oder genetischen Algorithmen ermöglicht.

Für die zuvor genannten Verfahren und/oder Analysemethoden ist es von besonderem Vorteil, dass eine Regelinduktion, insbesondere in einer Trainingsphase, angewendet wird. Das Ziel der Regelinduktion ist beispielsweise dass Aufspüren von Regeln bzw. statistischen Auffälligkeiten in den Messwerten. So lassen sich beispielsweise Änderungen und Zusammenhänge für bestimmte Arten von Messwerten aufspüren. Eine gewisse Vorhersage oder Strategie kann aus den gewonnenen Erkenntnissen abgeleitet werden. Ein weiterer Vorteil der Regelinduktion liegt darin, dass die Regeln von einem Experten analysiert werden können. Damit können Fehler vermieden werden.

Mit Vorteil wird die Prognose für mindestens einen, vorzugsweise mehrere zukünftige Überarbeitungsschritte ermittelt.

In einer alternativen Ausgestaltung der Erfindung wird für die Prognose hinsichtlich der Qualitätsmerkmale des Fertigungsgutes, insbesondere eine "Gut-Schlecht-Aussage", ermittelt.

Zweckmäßig ist es, dass für die Prognose ein numerisches Attribut, insbesondere ein Mittelwert, und/oder ein diskretes Attribut ermittelt wird. Die Ermittlung eines diskreten Attributes ist im einfachsten Fall eine "Gut-Schlecht-Aussage", hingegen ist die Ermittlung von numerischen Attributen eine Aussage, welche sich auf Werte beziehen, die in der unmittelbaren Nähe einer Entscheidungsgrenze liegen. Auch im Hinblick auf eine Trainingsphase oder einem Rückführen von Ergebnissen in die Referenzdaten können Attribute geschaffen werden, die eine Komplexität senken und damit eine Interpretationsfähigkeit der generierten Lösung erhöhen. In vielen Fällen liefern die Analysealgorithmen keine binäre Entscheidung, sondern einen numerischen Wert, der mit einer Entscheidungsgrenze verglichen wird, um zu einer Vorhersage zu kommen. Der Abstand des vorhergesagten numerischen Wertes zu der Entscheidungsgrenze liefert aber auch Rückschlüsse auf die Sicherheit der Vorhersage. Vorhersagen, die eng benachbart an der Grenze liegen, sind naturgemäß mit einer größeren Unsicherheit behaftet als Vorhersagen, die weit von der Grenze entfernt sind. Durch diese Tatsache kann die Sicherheit der Vorhersage gesteigert werden, indem vorzugsweise für Fertigungsgüter, deren Vorhersage-Wert weit von einem Grenzwert entfernt ist, auf die Vorhersage des intelligenten Algorithmus vertraut wird. Fertigungsgüter bei denen eine sichere Vorhersage nicht möglich ist, werden auf konventionellem Wege weiterverarbeitet.

Vorteilhaft ist, dass aus mehreren Fertigungsgütern ein Aggregat zusammengesetzt wird. Dabei ist es von besonderem Vorteil, dass einzelne Fertigungsgüter schon vor dem Zusammensetzen geprüft werden. Wird schon vor dem Zusammensetzen ein Fehler gefunden, so spart man sich im Fehlerfall die Kosten für den Zusammenbau und, falls das ganze Aggregat im Fehlerfalle entsorgt wird, die Kosten für die intakten Bauteile, die verbaut wurden. Generell gilt: Je früher ein Fehler erkannt wird, desto höher ist die Kostenersparnis.

Vorzugsweise wird eine Qualitätsaussage für das Aggregat ermittelt. Sind aufgrund der Analysedaten von einzelnen Fertigungsgütern die Attribute oder Qualitätsmerkmale bekannt, können sie auch zusammenfassend auf ein Aggregat angewendet werden.

Ein bevorzugtes, jedoch keinesfalls einschränkendes Ausführungsbeispiel der Erfindung wird nunmehr anhand der Zeichnung näher erläutert. Zur Verdeutlichung ist die Zeichnung nicht maßstäblich ausgeführt, und gewisse Merkmale sind nur schematisiert dargestellt. Im Einzelnen zeigt die
- FIG 1: eine funktionelle Darstellung einer Datenerfassung für einen Produktionsprozess,
- FIG 2: ein prinzipieller Verfahrensablauf nach der Erfindung mit einer Datenanalyse und Entscheidungsprozessen,
- FIG 3: eine Automatisierungslösung innerhalb eines Produktionsprozesses.

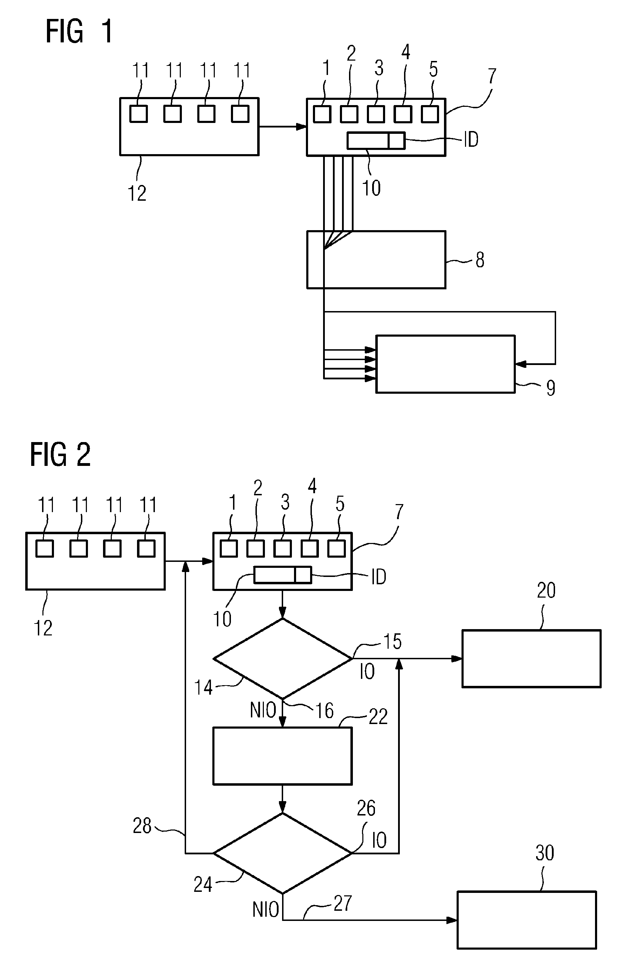

In FIG 1 ist ein Produktionsprozess 12 mit anschließender Qualitätsüberprüfung 7 dargestellt. In dem Produktionsprozess 12 werden in einer Serienfertigung Fertigungsgüter 11, z.B. Pumpen, produziert. Mittels der Qualitätsüberprüfung 7 werden von jedem Fertigungsgut 11 Messwerte 1 bis 5 erfasst, beispielsweise eine Spannung, eine Temperatur, eine Stromstärke, ein Druck und eine Information über das Vorhandensein einer Komponente. Die erfassten Messwerte 1 bis 5 werden zumindest teilweise zu einem Prüfdatensatz 10 zusammengestellt. Dem Prüfdatensatz 10 wird eine eindeutige Fertigungsgut-Kennung ID zugewiesen. In der Qualitätsüberprüfung 7 findet bereits eine Entscheidung, ob die Messwerte 1 bis 5 in ihren Sollwertbereichen liegen, statt.

Die Messwerte 1 bis 5 oder der Prüfdatensatz 10 werden an eine Datenaufbereitung 8 übertragen. Anhand der Fertigungsgut-Kennung ID werden Daten gleicher Fertigungsgüter 11 in der Datenaufbereitung 8 zusammengeführt. Eine Zuordnung zu klassenspezifischen Eigenschaften ist ebenso Bestandteil der Datenaufbereitung 8. An die Datenaufbereitung 8 schließt sich ein überwachtes Lernen 9 an. Während dem überwachten Lernen 9 wird anhand der aufbereiteten Daten aus 8 ein Modell erstellt, das in der Lage ist, das Ergebnis einer zweiten Qualitätsüberprüfung vorherzusagen. Hierbei ist zu beachten, dass nur während des Trainingsprozesses die aufbereiteten Daten benötigt werden, im produktiven Betrieb reicht der Prüfdatensatz 10 aus.

Zum Aufstellen und Trainieren des mathematischen Modells werden dazu eine feste Anzahl an Klassen und Beispielen von Klasseninstanzen und deren Attributwerten aufgestellt. Ein Entscheidungsbaum wird mit einem C4.5 Algorithmus aus "J. R. Quinlan, (1993), C4.5 Programs for Machine Learning" trainiert.

Zum Aufnehmen einer Erkennungsrate von Fertigungsgütern 11, welche letztendlich nicht in Ordnung sind, wird eine 5-fache Crossvalidation durchgeführt. Um möglichst realitätsnahe Ergebnisse zu erzielen werden Klassifikationsalgorithmen daher nur mit Daten trainiert, die von Fertigungsgütern stammen, die bei der ersten Prüfung als nicht in Ordnung NIO geprüft wurden. Da Trainings- und Testmenge dabei disjunkt sind, wird auch später im praktischen Betrieb die geforderte Erkennungsrate erreicht.

FIG 2 zeigt die Auswertung und die Verfahrensschritte der Qualitätsüberprüfung 7 für den Produktionsprozess 12. Die aus dem Produktionsprozess 12 von den Fertigungsgütern 11 erfassten Messwerte 1 bis 5 bzw. der Prüfdatensatz 10 werden einer Erst-Bewertung 14 zugeführt. Mittels der Erst-Bewertung 14 wird entschieden, ob der erfasste Messwert 1 bis 5 jeweils innerhalb eines vorgegebenen Sollwertbereiches liegt. Liegt der oder liegen die erfassten Messwerte 1 bis 5 innerhalb ihres Sollwertbereiches so wird anhand der Erst-Bewertung 14 eine Entscheidung für eine erste Handlungsalternative 15 getroffen. Das Fertigungsgut 11 mit seiner Fertigungsgut-Kennung ID hat also die geforderten Qualitätskriterien bestanden und wird als in Ordnung IO erklärt. Die Prüfung ist somit bestanden und die Auslieferung 20 des Fertigungsgutes 11 kann beginnen.

Fällt in der Erst-Bewertung 14 die Entscheidung auf eine zweite Handlungsalternative 16, welches gleichzeitig bedeutet, dass mindestens einer der erfassten Messwerte 1 bis 5 außerhalb seines vorgegebenen Sollwertbereiches liegt, so werden die Messwerte 1 bis 5 einer Analyse 22 zugeführt. Anhand des in Schritt 9 (Fig. 1) gelernten Modells wird der Prüfdatensatz 10 analysiert, was zu einer Vorhersage 24 führt. Als Modell wird ein Entscheidungsbaum mit drei Regeln oder allgemein ein neuronales Netz NN (hier nicht dargestellt) angewendet.

Der erste Messwert 1 repräsentiert einen angelegten Spannungswert von 4,2 V, der zweite Messwert 2 steht für einen Umgebungs-Temperaturwert von 68,3 °C, der dritte Messwert 3 beschreibt eine aufgenommene Stromstärke von 5,1 A und der vierte Messwert gibt einen Förder-Druck von 20,1 bar an. Der fünfte Messwert gibt eine Aussage über eine eingelegte Distanzscheibe Null deutet auf ein Fehlen der Distanzscheibe hin. Da der Förderdruck mit 20,1 bar seinen Sollwertbereich von 19,8 - 20,0 bar überschritten hat, ist bei dem Fertigungsgut 11 mit dem zugehörigen Messwert des Förderdruckes von 20,1 bar ein Qualitätskriterium verletzt, welches ohne erfindungsgemäße Vorgehensweise zu einer sofortigen Aussonderung und/oder zu einer erneuten Messung führen würde.

Da aber nicht zwingend das Fertigungsgut 11 auf Grund eines einzelnen außerhalb seines Sollwertbereiches liegenden Messwertes als nicht in Ordnung erklärt werden muss und eine erneute Messung vermieden werden soll, wird im Beispiel gemäß der Erfindung eine Aussage oder Vorhersage, ob das Fertigungsgut 11 in Ordnung ist oder nicht, dadurch getroffen werden, dass die Messwerte 1 bis 5 mit den folgenden drei Regeln überprüft werden.
Regel 1: 4V ≤ Messwert 1 AND Messwert 2 > 67,6 °C THEN IO
Regel 2: Messwert 3 ≥ 5A AND Messwert 4 ≤ 21 bar THEN IO
Regel 3: Messwert 5 ≠ 0 THEN IO

Durch Einsetzen der aktuellen Messwerte 1 bis 5 in die Regeln 1 bis 3 werden folgende Teilergebnisse abgeleitet:
"4V ≤ 4,2 V AND 68,3 °C > 67,6 °C THEN IO".
Regel 1 liefert als ein erstes Teilergebnis, dass das Fertigungsgut 11 in Ordnung IO ist. Obwohl der Förderdruck nicht innerhalb seines Sollwertbereiches liegt wird mit Regel 2 "5,1 A ≥ 5A AND 20,1 ≤ 21 bar THEN IO" ein zweites Teilergebnis bereitgestellt, welches das Fertigungsgut 11 als in Ordnung IO einstuft. Da der fünfte Messwert 5 einen Wert ungleich Null aufweist, wird mit Regel 3 einem dritten Teilergebnis auch der Status Fertigungsgut 11 in Ordnung IO zugewiesen.

Nach der Regelauswertung lautet das Gesamtergebnis der Vorhersage 24: Fertigungsgut 11 in Ordnung. Da die Regeln "Experten-Wissen" widerspiegeln, wird entgegen der negativen Aussage eines einzelnen Messwertes das Gesamtergebnis positiv, weil die Messwerte in ihrer Korrelation zueinander bewertet wurden.

Dadurch wird in der Vorhersage 24 eine Handlungsalternative 26 gewählt. Die Handlungsalternative 26 sagt aus, dass das Fertigungsgut 11 nach erfolgter Analyse 22 die geforderten Qualitätsmerkmale erfüllt. Das Fertigungsgut 11 ist somit als in Ordnung erkannt worden und kann der Auslieferung 20 zugeführt werden.

Die Vorhersage 24 besitzt zwei weitere Handlungsalternativen 27 und 28. Die Handlungsalternative 27 setzt die Entscheidung voraus, dass das Fertigungsgut auch nach der Analyse 22 als nicht in Ordnung NIO erkannt wurde. Das Fertigungsgut 11 hat mit der Entscheidung für die Handlungsalternative 27 die Qualitätsprüfung nicht bestanden und es erfolgt eine Aussonderung 30. Für den Fall, dass keine Entscheidung getroffen werden kann, wird das Fertigungsgut 11 erneut der Überprüfung 7 zugeführt.

Durch den Einsatz eines "Data-Mining"-Algorithmus in der Analyse 22 wird die Durchführung von Doppelmessungen vermieden oder zumindest stark reduziert.

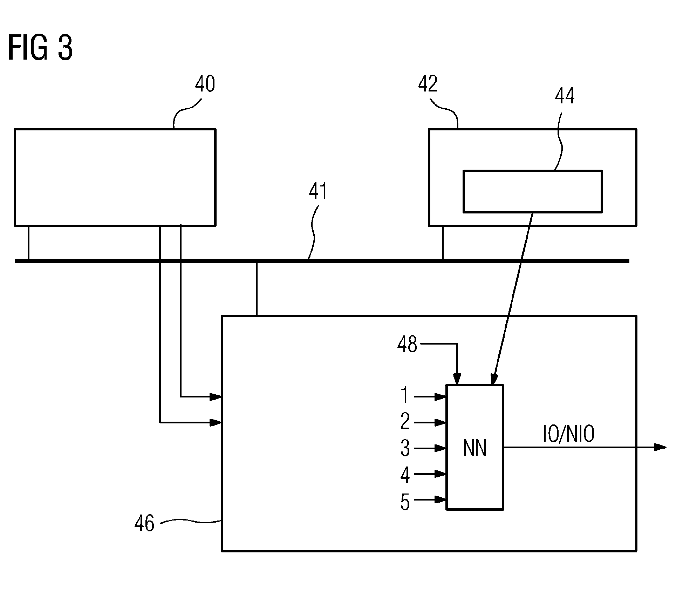

FIG 3 zeigt ausschnittsweise die Anwendung des Verfahrens nach der Erfindung zur Prüfung des Fertigungsgutes 11 in einem Produktionsprozess 12 mittels vernetzten Automatisierungskomponenten. Ein Mess-Rechner 40 erfasst die in FIG 1 und 2 dargestellten Messwerte 1 bis 5. Eine Arbeitsstation 42, umfassend ein Data-Mining Konfigurations-System 44, steht über ein Industrial-Ethernet 41 mit dem Mess-Rechner 40 und einem Automatisierungs-System 46 in Verbindung. Das Data-Mining Konfigurations-System oder ein "Data Mining Tool" besitzt Mittel, um die erzeugten Modelle zu exportieren, in das Automatisierungssystem 46 zu laden und im Produktions- und Prüfprozess zu nutzten. Das Automatisierungs-System 46 weist ein neuronales Netz NN auf. Das neuronale Netz NN ist mittels Datenbausteinen und Funktionsbausteinen innerhalb des Automatisierungsgerätes als Software-Lösung implementiert. Über das "Data-Mining" Konfigurations-System 44 kann das neuronale Netzwerk NN grundsätzlich neu konfiguriert werden oder auch an sich verändernde Messbedingungen oder Auswertebedingungen angepasst werden. Die Messwerte 1 bis 5, welche mittels des Mess-Rechners 40 erfasst und über das Industrial-Ethernet 41 an das Automatisierungssystem 46 weitergegeben wurden, werden mittels des in FIG 2 dargestellten Ablaufs und durch das neuronale Netzwerk NN analysiert. Das neuronale Netzwerk NN ermittelt als Analyseergebnis eine Wahrscheinlichkeit dafür, dass das Fertigungsgut 11 in Ordnung IO, also direkt verbaut werden kann, oder dass das Fertigungsgut 11 nicht in Ordnung NIO ist, also einer erneuten Analyse unterzogen werden muss oder einem weiteren Überarbeitungsschritt zugeführt werden muss.

## Patentansprüche

1. Verfahren zur Prüfung eines Fertigungsgutes (11),
- wobei mindestens ein ein Prüfkriterium repräsentierender Messwert (1 bis 5) des Fertigungsgutes (11) erfasst wird,
- wobei entschieden wird, ob der erfasste Messwert (1 bis 5) innerhalb eines vorgegebenen Sollwertbereiches liegt,
**dadurch gekennzeichnet, dass**
- ein außerhalb des Sollwertbereiches liegender Messwert (1 bis 5) mittels Referenzdaten analysiert wird,
- wobei als Analyseergebnis eine Prognose (24) dafür ermittelt wird, dass das Fertigungsgut (11) bei erneuter Entscheidung das Prüfkriterium erfüllen wird.

2. Verfahren nach Anspruch 1,
**dadurch gekennzeichnet, dass** erfasste Messwerte (1 bis 5) zu mehreren Fertigungsgütern (11) zu den Referenzdaten zusammengefasst und archiviert werden.

3. Verfahren nach Anspruch 1 oder 2,
**dadurch gekennzeichnet, dass** erfasste Messwerte (1 bis 5) desselben Fertigungsgutes (11) zu einem Prüfdatensatz (10) zusammengefasst werden.

4. Verfahren nach Anspruch 3,
**dadurch gekennzeichnet, dass** dem Prüfdatensatz (10) eine Fertigungsgut-Kennung (ID) zugewiesen wird.

5. Verfahren nach Anspruch 3 oder 4,
**dadurch gekennzeichnet, dass** dem Prüfdatensatz (10) das Analyseergebnis zugewiesen wird.

6. Verfahren nach Anspruch 4 oder 5,
**dadurch gekennzeichnet, dass** mittels der Fertigungsgut-Kennung (ID) unterschiedliche Messergebnisse des gleichen Fertigungsgutes (11) zusammengeführt werden.

7. Verfahren nach einem der Ansprüche 1 bis 6,
**dadurch gekennzeichnet, dass** die Analyse (22) mittels intelligenter Algorithmen, insbesondere mittels "Data-Mining"-Algorithmen, durchgeführt wird.

8. Verfahren nach Anspruch 7,
**dadurch gekennzeichnet, dass** mindestens eine der folgenden Methoden:
a) Analyse mittels eines Entscheidungsbaumes,
b) Analyse mittels eines neuronalen Netzes (NN),
c) Analyse mittels eines Metalern-Algorithmuses, insbesondere einem "Bagging-Algorithmus",
d) Analyse mittels Verfahren zur Regelinduktion,
e) Analyse mittels eines adaptierten Modells,
f) Analyse mittels Fuzzy-Algorithmen und/oder Fuzzy-Reglern angewendet wird.

9. Verfahren nach einem der Ansprüche 1 bis 8,
**dadurch gekennzeichnet, dass** eine Regelinduktion, insbesondere in einer Trainingsphase, angewendet wird.

10. Verfahren nach einem der Ansprüche 1 bis 9,
**dadurch gekennzeichnet, dass** die Prognose (24) für mindestens einen, vorzugsweise mehrere zukünftige Bearbeitungsschritte, ermittelt wird.

11. Verfahren nach einem der Ansprüche 1 bis 10,
**dadurch gekennzeichnet, dass** für die Prognose (24) hinsichtlich der Qualitätsmerkmale des Fertigungsgutes (11), insbesondere eine "Gut-Schlecht-Aussage", ermittelt wird.

12. Verfahren nach einem der Ansprüche 1 bis 11,
**dadurch gekennzeichnet, dass** für die Prognose (24)
- ein numerisches Attribut, insbesondere ein Mittelwert und/oder,
- ein diskretes Attribut ermittelt wird.

13. Verfahren nach einem der Ansprüche 1 bis 12,
**dadurch gekennzeichnet, dass** aus mehreren Fertigungsgütern (11) ein Aggregat zusammengesetzt wird.

14. Verfahren nach Anspruch 13,
**dadurch gekennzeichnet, dass** eine Qualitätsaussage für das Aggregat ermittelt wird.
